# FASCICULE DE BREVET EUROPEEN

(11) **EP 3 218 587 B1**
(45) Date de publication et mention de la délivrance du brevet: **13.03.2019**
(21) Numéro de dépôt: 15798533.4
(22) Date de dépôt: 03.11.2015
(51) Int. Cl.: F02B 41/10, F01N 13/10, F02B 37/00

(54) **MOTEUR À COMBUSTION INTERNE ÉQUIPÉ D'UN SYSTÈME DE TURBO-RÉCUPÉRATION D'ÉNERGIE**
MIT EINEM TURBOENERGIERÜCKGEWINNUNGSSYSTEM AUSGESTATTETER VERBRENNUNGSMOTOR
INTERNAL COMBUSTION ENGINE PROVIDED WITH A TURBO ENERGY RECOVERY SYSTEM

(30) Priorité: 14.11.2014 FR 1461006
(43) Date de publication de la demande: 20.09.2017
(73) Titulaire: Renault s.a.s., 92100 Boulogne-Billancourt (FR)
(72) Inventeur: MALLET, Philippe, F-78810 Feucherolles (FR)
(86) Numéro de dépôt international: PCT/FR2015/052951
(87) Numéro de publication internationale: WO 2016/075388

(56) Documents cités:
- EP-A1- 2 101 047
- GB-A- 2 423 797
- US-A- 5 857 336
- US-A1- 2012 023 935

## Description

### DOMAINE TECHNIQUE AUQUEL SE RAPPORTE L'INVENTION

La présente invention concerne de manière générale l'optimisation du rendement des moteurs à combustion interne en vue de la réduction de leurs émissions polluantes.

Elle concerne plus particulièrement un moteur à combustion interne comportant :
- un bloc-moteur qui délimite au moins un cylindre dont la tête présente au moins une ouverture d'admission, ainsi que des première et seconde ouvertures d'échappement,
- une ligne d'admission qui comporte un compresseur et qui débouche sur chaque ouverture d'admission du bloc-moteur, et
- une ligne d'échappement, qui prend naissance dans chaque ouverture d'échappement du bloc-moteur et qui comporte une première turbine d'entraînement du compresseur et une seconde turbine d'entraînement d'un système de récupération d'énergie.

### ARRIERE-PLAN TECHNOLOGIQUE

Dans un moteur à combustion interne, l'air frais et le carburant sont brûlés dans les cylindres afin de mettre en mouvement les pistons logés dans ces cylindres.

On estime actuellement que le rendement d'un tel moteur ne dépasse jamais les 50%, du fait notamment des pertes thermiques (le moteur chauffe inutilement) et cinétiques (les gaz brûlés sont inutilement expulsés à grande vitesse).

Une idée bien connue pour accroître les performances d'un moteur de ce type consiste à l'équiper d'un turbocompresseur en vue de profiter de l'énergie cinétique des gaz brûlés. Dans un tel moteur, la ligne d'échappement des gaz brûlés est équipée d'une première turbine qui entraîne un compresseur placé dans la ligne d'admission d'air. La turbine est alors entraînée en rotation par le flux de gaz brûlés expulsés des cylindres, ce qui permet d'actionner le compresseur et donc de comprimer l'air frais afin que davantage d'air frais puisse s'engouffrer dans les cylindres à chaque cycle du moteur.

Une autre idée pour améliorer le rendement global d'un tel moteur consiste à placer une seconde turbine sur la ligne d'échappement des gaz brûlés, en aval de la première turbine, afin d'entraîner une machine électrique. La seconde turbine est alors entraînée en rotation par le flux de gaz brûlés qui sort de la première turbine, ce qui permet de produire un courant électrique.

On constate que le flux de gaz brûlés entrant dans la seconde turbine est toutefois perturbé par la première turbine (il présente notamment une pression moindre du fait de sa détente dans la première turbine), ce qui réduit l'efficacité de la production d'énergie électrique.

L'architecture pour mettre en oeuvre ce système, avec deux turbines branchées en série, à la suite l'une de l'autre, s'avère en outre complexe. Cette architecture nécessite en effet de prévoir des circuits de délestage des turbines, équipés de vannes correspondantes, de manière que les turbines ne perturbent pas le fonctionnement du moteur à charge faible et/ou à régime réduit.

### OBJET DE L'INVENTION

La présente invention propose un moteur à combustion interne d'architecture plus simple et dans lequel le flux de gaz brûlés traversant la seconde turbine est peu perturbé.

Plus particulièrement, on propose selon l'invention un moteur à combustion interne tel que défini dans l'introduction, dans lequel la seconde turbine communique exclusivement avec la seconde ouverture d'échappement de chaque cylindre du bloc-moteur.

En d'autres termes, les deux turbines sont ici branchées en parallèle l'une de l'autre. Ainsi, les gaz brûlés qui sont expulsés des cylindres par les premières ouvertures d'échappement sont conduits vers la première turbine (celle du turbocompresseur), tandis que ceux expulsés par les secondes ouvertures d'échappement sont conduits vers la seconde turbine (celle du système de récupération d'énergie électrique).

Par conséquent, grâce à l'invention, les gaz brûlés qui traversent la seconde turbine n'ont pas été détendus et perturbés par la première turbine. De ce fait, la seconde turbine peut être entraînée en rotation avec une grande efficacité, ce qui optimise le rendement du système de récupération d'énergie.

En outre, l'architecture mise en oeuvre par l'invention peut s'avérer particulièrement simple, puisque, comme cela sera exposé en détail dans la suite, il suffit au minimum de prévoir deux conduits distincts pour connecter les premières ouvertures d'échappement à la première turbine et les secondes ouvertures d'échappement à la seconde turbine. Aucune vanne n'est alors absolument nécessaire pour mettre en oeuvre l'invention (il suffit en effet de piloter de la manière souhaitée les soupapes d'échappement pour amener la quantité voulue de gaz brûlés vers chaque turbine).

D'autres caractéristiques avantageuses et non limitatives du moteur à combustion interne conforme à l'invention sont les suivantes :
- la première turbine communique exclusivement avec la première ouverture d'échappement de chaque cylindre du bloc-moteur ;
- il est prévu des premiers moyens de régulation du débit de gaz brûlés traversant ladite première turbine, des seconds moyens de régulation du débit de gaz brûlés traversant ladite seconde turbine, et des moyens de pilotage desdits seconds moyens de régulation qui sont adaptés à réguler le débit de gaz brûlés traversant ladite seconde turbine de manière autonome du débit de gaz brûlés traversant ladite première turbine ;
- les premiers moyens de régulation comportent, pour chaque cylindre, une première soupape adaptée à fermer ladite première ouverture d'échappement et des moyens de commande de la levée de la première soupape à hauteur fixe ;
- les seconds moyens de régulation comportent, pour chaque cylindre, une seconde soupape adaptée à fermer ladite seconde ouverture d'échappement et des moyens de commande de la levée de la seconde soupape à hauteur variable ;
- les moyens de pilotage sont adaptés à faire varier la hauteur de levée de chaque seconde soupape entre une valeur nulle et une valeur maximale non nulle ;
- il est prévu une ligne de recirculation haute pression des gaz brûlés depuis la ligne d'échappement vers la ligne d'admission, qui prend naissance entre la première ouverture d'échappement de chaque cylindre et la première turbine ; et
- la ligne d'échappement comporte des moyens de traitement des gaz brûlés, dont une entrée communique avec les première et seconde turbines.

### DESCRIPTION DETAILLEE D'UN EXEMPLE DE RÉALISATION

La description qui va suivre en regard du dessin annexé, donné à titre d'exemple non limitatif, fera bien comprendre en quoi consiste l'invention et comment elle peut être réalisée.

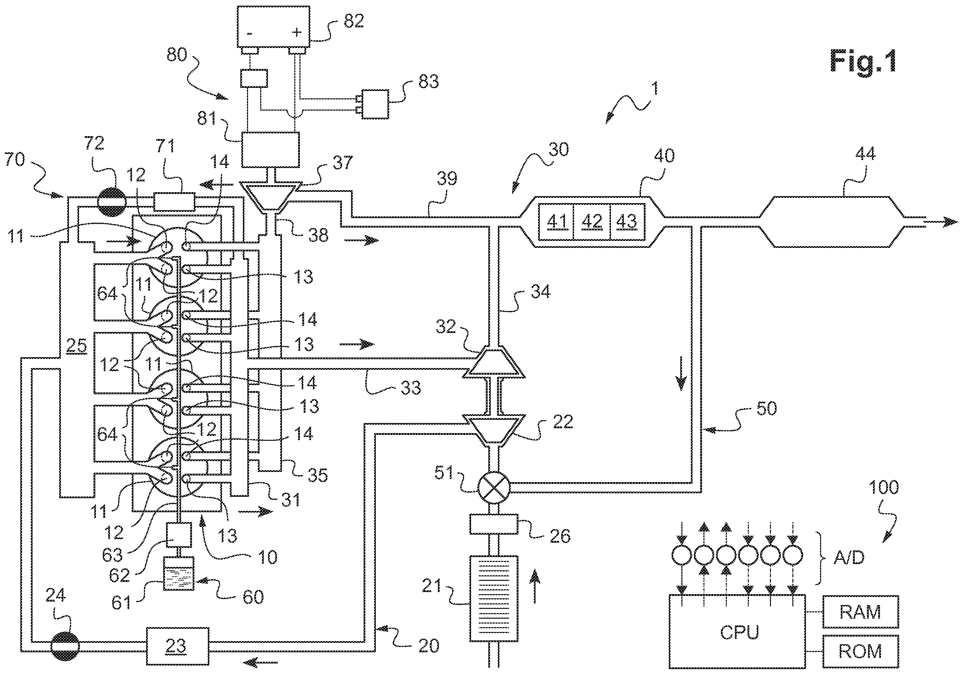

Sur ce dessin annexé, la figure 1 est une vue schématique d'un moteur à combustion interne selon l'invention.

L'invention porte sur un moteur à combustion interne.

Il peut aussi bien s'agir d'un moteur diesel que d'un moteur à allumage commandé.

Ce moteur à combustion interne équipe ici un véhicule automobile. Il pourrait être utilisé seul dans ce véhicule automobile. On considérera ici qu'il est utilisé en combinaison avec un moteur électrique de traction du véhicule (on parlera alors de véhicule hybride).

Dans la description, les termes « amont » et « aval » seront utilisés suivant le sens de l'écoulement des gaz, depuis le point de prélèvement de l'air frais dans l'atmosphère jusqu'à la sortie des gaz brûlés dans l'atmosphère.

Le moteur à combustion interne 1 est représenté schématiquement sur la figure 1.

Comme le montre cette figure, il comprend un bloc-moteur 10, qui est le lieu de la combustion de l'air frais et du carburant.

Ce bloc-moteur 10 comporte classiquement un bloc-cylindres, qui délimite ici quatre cylindres 11 en lignes d'axes parallèles.

Ce bloc-moteur 10 comporte également un carter d'huile (non représenté) qui est fixé sous le bloc-cylindres et qui renferme de l'huile destinée à lubrifier les différents organes du moteur, et une culasse (non représentée) qui est fixée sur le bloc-cylindres. La culasse présente quatre zones distinctes qui recouvrent les quatre cylindres 11. On dit de ces quatre zones qu'elles forment quatre têtes de cylindre.

Classiquement, chaque cylindre 11 loge un piston qui est adapté à coulisser le long de la paroi interne du cylindre selon un mouvement rectiligne alternatif (ou mouvement de va-et-vient) d'axe confondu avec l'axe du cylindre. Ce piston est relié à un vilebrequin par l'intermédiaire d'une bielle de telle sorte que le mouvement rectiligne alternatif du piston permet d'entraîner en rotation le vilebrequin. Un système d'embrayage et de boîte de vitesses permet alors au vilebrequin d'entraîner les roues motrices du véhicule automobile afin de le faire avancer.

En amont des cylindres 11, le moteur à combustion interne 1 comporte une ligne d'admission 20 qui prélève l'air frais dans l'atmosphère et qui débouche dans un répartiteur d'air 25 fixé à la culasse et agencé pour répartir l'air frais vers chacun des quatre cylindres 11 du bloc-moteur 10.

Cette ligne d'admission 20 comporte, dans le sens d'écoulement de l'air frais, un filtre à air 21 qui filtre l'air frais prélevé dans l'atmosphère, un débitmètre 26, un compresseur 22 qui comprime l'air frais filtré par le filtre à air 21, un refroidisseur d'air principal 23 qui refroidit cet air frais comprimé, et une vanne d'admission 24 qui permet de réguler le débit d'air frais débouchant dans le répartiteur d'air 25.

Pour l'admission en air frais de chaque cylindre 11, la culasse est percée de conduits d'admission qui s'étendent depuis le répartiteur d'air 25 jusqu'à huit ouvertures d'admission 12 réparties par paires sur les quatre têtes de cylindres.

En sortie des cylindres 11, le moteur à combustion interne 1 comporte une ligne d'échappement 30 qui prend naissance dans les cylindres 11 et qui s'étend jusqu'à un silencieux d'échappement 44 permettant de détendre les gaz brûlés avant qu'ils ne soient évacués dans l'atmosphère.

Pour profiter de l'énergie cinétique des gaz brûlés issus des cylindres 11, cette ligne d'échappement 30 est équipée de deux turbines distinctes.

Classiquement, chaque turbine présente des aubes montées sur un arbre de telle sorte que le flux de gaz brûlés qui traverse la turbine provoque la rotation de l'arbre.

La ligne d'échappement 30 comporte ainsi une première turbine 32 adaptée à entraîner le compresseur 22 en rotation, grâce à des moyens de couplage mécanique (classiquement, un arbre de transmission commun au compresseur et à la turbine).

Elle comporte également une seconde turbine 32 adaptée à actionner un système de récupération d'énergie 80, également grâce à des moyens de couplage mécanique. Ce système de récupération d'énergie 80 comporte ici un alternateur 81 qui, une fois entraîné en rotation par la seconde turbine 37, permet de générer un courant électrique afin de recharger une batterie d'accumulateurs 82 (celle qui alimente le moteur électrique 83 de traction du véhicule hybride). Il pourrait en variante s'agir d'un autre système de récupération d'énergie.

Selon une caractéristique particulièrement avantageuse de l'invention, la première turbine 32 et la seconde turbine 37 sont connectées aux cylindres 11 par des conduits distincts (c'est-à-dire par des conduits qui ne communiquent pas entre eux).

En pratique, chaque tête de cylindre présente une première et une seconde ouvertures d'échappement 13, 14, et la culasse est percée de huit conduits d'échappement distincts qui s'étendent depuis ces première et seconde ouvertures d'échappement 13, 14 jusqu'à une face latérale de la culasse.

La ligne d'échappement 30 comporte par ailleurs deux collecteurs d'échappement 31, 35 distincts qui sont fixés sur cette face latérale de la culasse et qui ne communiquent pas ensemble. Les quatre conduits d'échappement qui prennent naissance dans les quatre premières ouvertures d'échappement 13 débouchent dans un premier de ces collecteurs d'échappement 31, tandis que les quatre autres conduits d'échappement qui prennent naissance dans les quatre secondes ouvertures d'échappement 14 débouchent dans le second collecteur d'échappement 35.

Une première tubulure d'échappement 33 permet alors de relier directement le premier collecteur d'échappement 31 à l'entrée de la première turbine 32, tandis qu'une seconde tubulure d'échappement 38 permet de relier directement le second collecteur d'échappement 35 à l'entrée de la seconde turbine 37. Par « directement », on entend qu'aucun dispositif particulier (tel qu'une vanne) ne se trouve entre chaque collecteur d'échappement et chaque turbine.

La ligne d'échappement 30 comporte par ailleurs des moyens de traitement 40 des gaz brûlés. Ces moyens de traitement 40 comportent par exemple ici un catalyseur trois voies qui renferme un catalyseur d'oxydation 41, un filtre à particules 42 et un piège à oxydes d'azote 43.

Les sorties des deux turbines 32, 37 sont alors respectivement connectées à l'entrée de ces moyens de traitement 40 par deux tubulures 34, 39 qui se rejoignent.

Pour réguler les débits d'arrivée d'air frais et de sortie de gaz brûlés dans chaque cylindre 11, la culasse loge des soupapes d'admission et d'échappement (non représentées) dont les extrémités évasées obturent les ouvertures d'admission 12 et d'échappement 13, 14. La culasse loge également des arbres à cames rotatifs qui sont liés en rotation au vilebrequin 10 par l'intermédiaire de moyens de couplage quelconque.

Classiquement, les cames de ces arbres à cames sont agencées pour appuyer périodiquement sur les soupapes de manière que chaque soupape se « lève » régulièrement d'une hauteur souhaitée afin de libérer un passage pour l'air frais ou les gaz brûlés.

Ici, les soupapes d'admission qui ferment les ouvertures d'admission 12 sont commandées pour se lever à chaque cycle du moteur d'une hauteur fixe. Il en est de même pour les soupapes d'échappement qui ferment les premières ouvertures d'échappement 13. Les cames qui commandent la levée de ces soupapes sont donc montées fixement sur leurs arbres à cames.

En revanche, les soupapes d'échappement qui ferment les secondes ouvertures d'échappement 14 sont commandées pour se lever à chaque cycle du moteur d'une hauteur variable. On dit de ces soupapes d'échappement qu'elles sont pilotées. Les cames qui commandent la levée de ces soupapes d'échappement pilotées sont donc montées mobiles sur leurs arbres à cames, et des moyens de pilotage permettent de commander la hauteur de levée de ces soupapes d'échappement pilotées à chaque cycle du moteur.

Préférentiellement, les moyens de pilotage seront adaptés à faire varier la hauteur de levée des soupapes d'échappement pilotées entre une hauteur nulle et une hauteur maximale (cette hauteur maximale correspondant par exemple à la hauteur de levée des autres soupapes d'échappement).

Ainsi, ces moyens de pilotage seront notamment adaptés à fermer les secondes ouvertures d'échappement 14 pendant l'ensemble d'un cycle du moteur, de manière que l'ensemble des gaz brûlés sortent de chaque cylindre 11 exclusivement par les premières ouvertures d'échappement 13.

L'utilisation de ces soupapes d'échappement pilotées sera bien décrite dans la suite de l'exposé.

L'architecture détaillée du mécanisme de commande de ces soupapes d'échappement pilotées ne faisant pas en propre l'objet de la présente invention, elle ne sera pas ici décrite en détail. On pourra en revanche se reporter au document FR2891004 pour trouver davantage de détails sur ce type architecture (qu'il faudra toutefois adapter au présent cas).

Ici, le moteur à combustion interne 1 comporte également une ligne de recirculation des gaz brûlés à haute pression depuis la ligne d'échappement 30 vers la ligne d'admission 20. Cette ligne de recirculation est communément appelée ligne EGR-HP 70, conformément à l'acronyme anglo-saxon de « Exhaust Gaz Recirculation - High Pressure ».

Elle prend naissance dans la ligne d'échappement 30, entre les premières ouvertures d'échappement 13 et la première turbine 32, et elle débouche dans la ligne d'admission 20, entre la vanne d'admission 24 et les ouvertures d'admission 12. En pratique ici, elle prend naissance dans le premier collecteur d'échappement 31 et débouche dans le répartiteur d'air 25.

Cette ligne EGR-HP 40 permet de prélever une partie des gaz brûlés circulant dans la ligne d'échappement 30, appelés gaz EGR-HP, pour la réinjecter dans les cylindres 11 afin de réduire les émissions polluantes du moteur, et en particulier les émissions d'oxydes d'azote. Cette ligne EGR-HP 40 comporte un refroidisseur secondaire 71 pour refroidir les gaz EGR-HP, suivi d'une vanne EGR-HP 72 pour réguler le débit de gaz EGR-HP débouchant dans le répartiteur d'air 25.

Le moteur à combustion interne 1 comporte aussi ici une ligne de recirculation des gaz brûlés à basse pression depuis la ligne d'échappement 30 vers la ligne d'admission 20. Cette ligne de recirculation est communément appelée ligne EGR-LP 40, conformément à l'acronyme anglo-saxon de « Exhaust Gaz Recirculation - Low Pressure ».

Elle prend naissance dans la ligne d'échappement 30, à la sortie des moyens de traitement 40, et débouche dans la ligne d'admission 20, entre le filtre à air 21 et le compresseur 22. Cette ligne EGR-LP 50 permet de prélever une partie des gaz brûlés circulant dans la ligne d'échappement 30, appelés gaz EGR-LP, pour la réinjecter dans les cylindres 11 afin également de réduire les émissions polluantes du moteur. Elle comporte une vanne de régulation 51 du débit de gaz EGR-LP, appelée vanne EGR-LP.

Le moteur à combustion interne 1 comporte par ailleurs une ligne d'injection 60 de carburant dans les cylindres 11. Cette ligne d'injection 60 comporte une pompe d'injection 62 agencée pour prélever le carburant dans un réservoir 61 afin de l'amener sous pression dans un rail de distribution 63. Cette ligne d'injection 60 comporte en outre quatre injecteurs 64 dont les entrées communiquent avec le rail de distribution 63 et dont les sorties débouchent respectivement dans les quatre cylindres 11.

Pour piloter les différents organes du moteur à combustion interne 1, il est prévu un calculateur 100 comportant un processeur (CPU), une mémoire vive (RAM), une mémoire morte (ROM), des convertisseurs analogiques-numériques (A/D), et différentes interfaces d'entrée et de sortie.

Grâce à ses interfaces d'entrée, le calculateur 100 est adapté à recevoir de différents capteurs des signaux d'entrée relatifs au fonctionnement du moteur (notamment le débit d'air frais mesuré par le débitmètre 26).

Grâce à une cartographie prédéterminée sur banc d'essais et mémorisée dans sa mémoire morte, le calculateur 100 est adapté à générer, pour chaque condition de fonctionnement du moteur, des signaux de sortie.

Enfin, grâce à ses interfaces de sortie, le calculateur 100 est adapté à transmettre ces signaux de sortie aux différents organes du moteur, notamment aux moyens de commande de la hauteur de levée des soupapes d'échappement pilotées.

Classiquement, lorsque le conducteur du véhicule automobile met le contact, le calculateur 100 s'initialise puis commande le démarreur et les injecteurs de carburant 64 pour que ceux-ci démarrent le moteur.

Lorsque le moteur est démarré, l'air frais prélevé dans l'atmosphère par la ligne d'admission 20 est filtré par le filtre à air 21, comprimé par le compresseur 22, refroidi par le refroidisseur d'air principal 23, puis brûlé dans les cylindres 11.

Tant que l'énergie cinétique des gaz brûlés doit être utilisée en priorité pour alimenter la première turbine, les soupapes d'échappement pilotées sont commandées pour rester immobiles, en position de fermeture des secondes ouvertures d'échappement 14.

Par conséquent, à leur sortie des cylindres 11, les gaz brûlés traversent tous la première turbine 32, puis ils sont traités et filtrés dans les moyens de traitement 40 et détendus à nouveau dans le silencieux d'échappement 34 avant d'être rejetés dans l'atmosphère.

En revanche, quand l'énergie cinétique des gaz brûlés devient surabondante par rapport aux besoins de la première turbine 32, les soupapes d'échappement pilotées sont commandées pour se lever à chaque cycle du moteur, d'une hauteur telle que le débit de gaz brûlés traversant la première turbine 32 permette d'actionner cette dernière à la vitesse souhaitée.

Le circuit comprenant le second collecteur d'échappement 35 et la seconde turbine 37 forme alors un circuit de délestage qui permet d'éviter que la première turbine 32 fonctionne à une vitesse trop élevée. Ce circuit permet en outre, grâce au système de récupération d'énergie 80, de compléter la charge de la batterie d'accumulateurs 82, de manière à accroître l'autonomie du moteur électrique 83.

La présente invention n'est nullement limitée au mode de réalisation décrit et représenté, mais l'homme du métier saura y apporter toute variante conforme aux revendications.

On pourrait ainsi prévoir que l'ensemble des soupapes logées dans la culasse soient commandées pour se lever d'une hauteur fixe à chaque cycle du moteur. Dans cette variante, la seconde turbine sera entraînée en rotation dès que le moteur sera démarré. Les tubulures connectées à la seconde turbine seront alors choisies pour présenter des diamètres sensiblement inférieurs à ceux des tubulures connectées à la première turbine, de manière que la majorité des gaz brûlés passe par cette première turbine.

Selon une autre variante, on pourrait prévoir que l'ensemble des soupapes logées dans la culasse soient commandées pour se lever d'une hauteur fixe à chaque cycle du moteur, et que le moteur soit équipé d'une vanne de régulation du débit traversant la seconde turbine.

Selon une autre variante de l'invention non représentée sur les figures, pour assurer une meilleure vidange des cylindres à chaque cycle du moteur, on pourrait prévoir que la première turbine communique non seulement avec le premier collecteur d'échappement, mais également avec le second collecteur d'échappement, via une troisième conduite. Cette troisième conduite sera alors équipée d'un clapet anti retour, de manière que les gaz brûlés débouchant dans le premier collecteur d'échappement ne puissent pas refluer vers le second collecteur d'échappement via cette troisième conduite. Cette troisième conduite sera en outre préférentiellement équipée d'une vanne de régulation du débit de gaz brûlés la traversant.

## Revendications

1. Moteur à combustion interne (1) comportant :
- un bloc-moteur (10) qui délimite au moins un cylindre (11) dont la tête présente au moins une ouverture d'admission (12), ainsi que des première et seconde ouvertures d'échappement (13, 14),
- une ligne d'admission (20) qui comporte un compresseur (22) et qui débouche sur chaque ouverture d'admission (12) du bloc-moteur (10), et
- une ligne d'échappement (30), qui prend naissance dans chaque ouverture d'échappement (13, 14) du bloc-moteur (10) et qui comporte une première turbine (32) d'entraînement du compresseur (22) et une seconde turbine (37) d'entraînement d'un système de récupération d'énergie (80),
laquelle seconde turbine (37) communique exclusivement avec la seconde ouverture d'échappement (14) de chaque cylindre (11) du bloc-moteur (10), **caractérisé en ce qu'**il est prévu :
- des premiers moyens de régulation du débit de gaz brûlés traversant ladite première turbine (32), qui comportent, pour chaque cylindre (11), une première soupape adaptée à fermer ladite première ouverture d'échappement (13) et des moyens de commande de la levée de la première soupape à hauteur fixe qui comprennent une came montée fixement sur un arbre à came,
- des seconds moyens de régulation du débit de gaz brûlés traversant ladite seconde turbine (37), qui comportent, pour chaque cylindre (11), une seconde soupape adaptée à fermer ladite seconde ouverture d'échappement (14) et des moyens de commande de la levée de la seconde soupape à hauteur variable, et
- des moyens de pilotage desdits seconds moyens de régulation qui sont adaptés à réguler le débit de gaz brûlés traversant ladite seconde turbine (37) de manière autonome du débit de gaz brûlés traversant ladite première turbine (32).

2. Moteur à combustion interne (1) selon la revendication précédente, dans lequel la première turbine (32) communique exclusivement avec la première ouverture d'échappement (13) de chaque cylindre (11) du bloc-moteur (10).

3. Moteur à combustion interne (1) selon l'une des revendications précédentes, dans lequel les moyens de pilotage sont adaptés à faire varier la hauteur de levée de chaque seconde soupape entre une valeur nulle et une valeur maximale non nulle.

4. Moteur à combustion interne (1) selon l'une des revendications précédentes, dans lequel il est prévu une ligne de recirculation haute pression (70) des gaz brûlés depuis la ligne d'échappement (30) vers la ligne d'admission (20), qui prend naissance entre la première ouverture d'échappement (13) de chaque cylindre (11) et la première turbine (32).

5. Moteur à combustion interne (1) selon l'une des revendications précédentes, dans lequel la ligne d'échappement (30) comporte des moyens de traitement (40) des gaz brûlés, dont une entrée communique avec les première et seconde turbines (32, 37).

## Patentansprüche

1. Verbrennungsmotor (1) umfassend:
- einen Motorblock (10), der wenigstens einen Zylinder (11) abgrenzt, dessen Kopf wenigstens eine Ansaugöffnung (12) sowie eine erste und zweite Auslassöffnung (13, 14) aufweist,
- eine Ansaugleitung (20), die einen Kompressor (22) umfasst und die an jeder Ansaugöffnung (12) des Motorblocks (10) mündet, und
- eine Auslassleitung (30), die in jeder Auslassöffnung (13, 14) des Motorblocks (10) beginnt und die eine erste Turbine (32) zum Antrieb des Kompressors (22) und eine zweite Turbine (37) zum Antrieb eines Energierückgewinnungssystems (80) umfasst,
wobei die zweite Turbine (37) ausschließlich mit der zweiten Auslassöffnung (14) von jedem Zylinder (11) des Motorblocks (10) verbunden ist,
**dadurch gekennzeichnet, dass** vorgesehen sind:
- erste Mittel zum Regeln der Menge von durch die erste Turbine (32) strömenden Auspuffgasen, die für jeden Zylinder (11) ein zum Schließen der ersten Auslassöffnung (13) ausgebildetes erstes Ventil und Mittel zum Steuern des Hubs des ersten Ventils mit einer festen Höhe, die eine fest an einer Nockenwelle befestigte Nocke umfassen, umfassen,
- zweite Mittel zum Regeln der Menge von durch die zweite Turbine (37) strömenden Auspuffgasen, die für jeden Zylinder (11) ein zum Schließen der zweiten Auslassöffnung (14) ausgebildetes zweites Ventil und Mittel zum Steuern des Hubs des zweiten Ventils mit einer variablen Höhe umfassen, und
- Mittel zum Steuern der zweiten Mittel zum Regeln, die zum Regeln der Menge von durch die zweite Turbine (37) strömenden Auspuffgasen unabhängig von der Menge von durch die erste Turbine (32) strömenden Auspuffgasen ausgebildet sind.

2. Verbrennungsmotor (1) nach dem vorhergehenden Anspruch, wobei die erste Turbine (32) ausschließlich mit der ersten Auslassöffnung (13) von jedem Zylinder (11) des Motorblocks (10) verbunden ist.

3. Verbrennungsmotor (1) nach einem der vorhergehenden Ansprüche, wobei die Steuermittel zum Variieren der Hubhöhe von jedem zweitem Ventil zwischen einem Wert von 0 und einem Höchstwert ungleich 0 ausgebildet sind.

4. Verbrennungsmotor (1) nach einem der vorhergehenden Ansprüche, wobei eine Hochdruck-Rückführleitung (70) für Auspuffgase von der Auslassleitung (30) zur Ansaugleitung (20) vorgesehen ist, die zwischen der ersten Auslassöffnung (13) von jedem Zylinder (11) und der ersten Turbine (32) beginnt.

5. Verbrennungsmotor (1) nach einem der vorhergehenden Ansprüche, wobei die Auslassleitung (30) Behandlungsmittel (40) für die Auspuffgase umfasst, von denen ein Eingang mit erster und zweiter Turbine (32, 37) verbunden sind.

## Claims

1. Internal-combustion engine (1) comprising:
- an engine block (10) that delimits at least one cylinder (11) of which the head has at least one intake opening (12), as well as first and second exhaust openings (13, 14),
- an intake line (20) that includes a compressor (22) and that opens out onto each intake opening (12) of the engine block (10), and
- an exhaust line (30) that starts in each exhaust opening (13, 14) of the engine block (10) and that has a first drive turbine (32) for the compressor (22) and a second drive turbine (37) for an energy recovery system (80), said second turbine (37) communicating exclusively with the second exhaust opening (14) of each cylinder (11) of the engine block (10),
**characterized in that** the following are provided:
- first means for regulating the flow rate of the burnt gases passing through said first turbine (32) that have, for each cylinder (11), a first valve designed to close said first exhaust opening (13) and means for controlling the lifting of the fixed-height first valve that include a cam mounted statically on a camshaft,
- second means for regulating the flow rate of the burnt gases passing through said second turbine (37) that have, for each cylinder (11), a second valve designed to close said second exhaust opening (14) and means for controlling the lifting of the variable-height second valve, and
- means for controlling said second regulating means that are designed to regulate the flow rate of burnt gases passing through said second turbine (37) independently of the flow rate of the burnt gases passing through said first turbine (32).

2. Internal-combustion engine (1) according to the preceding claim, in which the first turbine (32) communicates exclusively with the first exhaust opening (13) of each cylinder (11) of the engine block (10).

3. Internal-combustion engine (1) according to one of the preceding claims, in which the control means are designed to vary the lifting height of each second valve between a zero value and a maximum non-zero value.

4. Internal-combustion engine (1) according to one of the preceding claims, in which a high-pressure recirculation line (70) for the burnt gases is provided from the exhaust line (30) to the intake line (20), which starts between the first exhaust opening (13) of each cylinder (11) and the first turbine (32).

5. Internal-combustion engine (1) according to one of the preceding claims, in which the exhaust line (30) has means (40) for treating the burnt gases, an intake of which communicates with the first and second turbines (32, 37).
